# EUROPEAN PATENT SPECIFICATION

(11) **EP 1 874 050 B1**
(45) Date of publication and mention of the grant of the patent: **16.10.2013**
(21) Application number: 07012451.6
(22) Date of filing: 26.06.2007
(51) Int. Cl.: H04N 21/41, H04N 21/4363, H04W 4/00, H04W 4/08, H04W 8/18

(54) **Method for providing mobile television information in MBMS**
Verfahren zur Bereitstellung mobiler Fernsehinformationen in MBMS
Procédé pour la fourniture d'informations télévisées en MBMS

(30) Priority: 26.06.2006 GB 0612631
(43) Date of publication of application: 02.01.2008
(73) Proprietor: Samsung Electronics Co., Ltd., Suwon-si, Gyeonggi-do, 443-742 (KR)
(72) Inventor: Van Lieshout, Gert Jan, Suwon-si, Gyeonggi-do (KR); Van Der Velde, Himke, Suwon-si, Gyeonggi-do (KR)
(74) Representative: Nederlandsch Octrooibureau

(56) References cited:
- WO-A-2005/045603
- "Universal Mobile Telecommunications System (UMTS); Introduction of the Multimedia Broadcast/Multicast Service (MBMS) in the Radio Access Network (RAN); Stage 2 (3GPP TS 25.346 version 7.0.0 Release 7); ETSI TS 125 346" ETSI STANDARDS, EUROPEAN TELECOMMUNICATIONS STANDARDS INSTITUTE, SOPHIA-ANTIPO, FR, vol. 3-R2, no. V700, March 2006 (2006-03), XP014034304 ISSN: 0000-0001
- "Universal Mobile Telecommunications System (UMTS); Multimedia Broadcast/Multicast Service (MBMS); Stage 1 (3GPP TS 22.146 version 6.7.0 Release 6); ETSI TS 122 146" ETSI STANDARDS, EUROPEAN TELECOMMUNICATIONS STANDARDS INSTITUTE, SOPHIA-ANTIPO, FR, vol. 3-SA1, no. V670, March 2006 (2006-03), XP014033913 ISSN: 0000-0001

## Description

### BACKGROUND OF THE INVENTION

### 1. Field of the Invention

The present invention generally relates to a mobile communication system, and in particular, to a method and apparatus for providing information of available mobile television services from a network controller to a mobile communication device in a telecommunications network.

### 2. Description of the Related Art

A Multimedia Broadcast Multicast Service (MBMS) is a service where one or more data sources provide a service to a plurality of User Equipments (UEs). Such services can include a Video On Demand (VOD) service, a music video service, a television (TV) broadcasting service, etc. A UE, as used herein, can be a mobile communication device, a Personal Digital Assistant (PDA), a mobile telephone, a Moving Pictures Expert Group Layer 3 (MP3) player, a pager, a laptop computer, or any other similar mobile computing and receiving device.

UEs perform various functions specific to the device, and are often able to communicate (via wired or wireless connection) with other devices. For example, a UE may provide Internet access, maintain a personal calendar, provide mobile telephony, and take digital photographs. These mobile communication devices may also be capable of receiving broadcasting services and multimedia content distributed by an MBMS service.

A Universal Mobile Telecommunication Service (UMTS) system is a 3^{rd} Generation Partnership Project (3GPP) mobile communication system using Wideband Code Division Multiple Access (WCDMA) based on Global System for Mobile (GSM) communications and General Packet Radio Services (GPRS), both of which are European mobile communication systems, and provides a service where users of mobile telephones or computers can transmit packet-based text, digitalized voice or video, or multimedia data at a high speed.

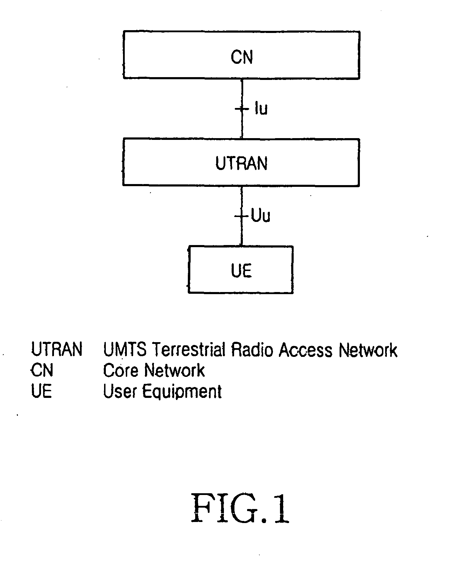

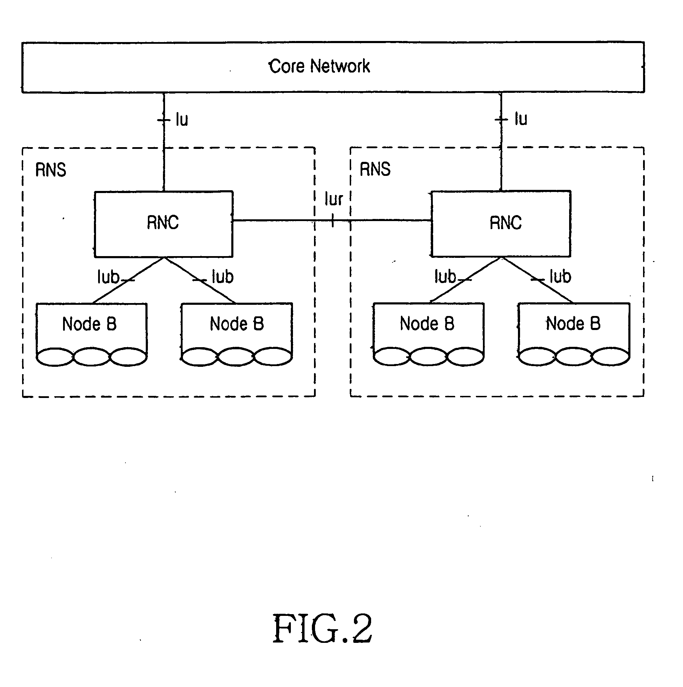

FIG. 1 shows a conventional mobile communications system including a UE 100, a Core Network (CN) 110, a UMTS Terrestrial Radio Access Network (UTRAN) 110, and one or more UEs 130. FIG. 2 shows a UMTS network including the CN 110 and a plurality of Radio Network Subsystems (RNSs). The RNSs correspond to the UTRAN 100 shown in FIG. 1. In order to connect the UTRAN with a packet data network, such as the Internet, the CN 100 includes a Serving GPRS Support Node (SGSN) and a Gateway GPRS Support Node (GGSN).

Each RNS includes a Radio Network Controller (RNC) and a plurality of Node Bs. The RNC can be classified as a serving RNC, a drift RNC, and a control RNC, according to their roles. The serving RNC controls communication information of a UE and exchanges data with the CN. The drift RNC directly connects with a UE by wireless communication, and the control RNC controls radio resources of each Node B.

The RNCs and the Node Bs are interconnected through CN-UTRAN interfaces lu, the RNCs are interconnected through an RNC-RNC interface lur, and the RNCs are connected to the Node Bs through RNC-Node B interfaces lub. The UTRAN is interconnected to UEs through a radio interface Uu (not shown). Each RNC allocates radio resources to Node Bs controlled by the particular RNC. The radio resources are arranged according to each cell, and the radio resources provided by each Node B correspond to radio resources for a specific cell.

Current UMTS standards provide for a provision of an MBMS service by a UMTS communication service to UEs serviced by the system and which subscribed to the service. When the MBMS service has MBMS data for conveyance to subscribers to the service, a RNC included the UTRAN determines whether to establish a point-to-multipoint (p-t-m) communication channel in a cell or a point-to-point (p-t-p) communication channel to each UE in the cell. The RNC then broadcasts an MBMS notification message via a Node B included in the RNS.

A UTRAN currently does not maintain information regarding which session a UE has received. The CRNC may perform a session based counting in order to decide whether to provide a service via a p-t-m radio bearer. If the CRNC decides to provide the service via a p-t-p radio bearer, a UE in idle mode and over a PCH initiates the establishment of this p-t-p radio bearer. For UEs using a Forward Access Channel (FACH) and a dedicated channel (DCH), the UTRAN initiates Radio Bearer (RB) establishment. However, when a UE has already received this session provided p-t-p or prioritizes another service, the UE will reject the p-t-p radio bearer establishment.

In current CRNC-based counting, the CRNC may request counting for an MBMS transmission by including the concerned transmission in the MBMS Modified Services Information with a UE set to acquire counting information. The UE will subsequently receive the MBMS Access Information, which includes further details about the UEs that should respond to the counting, e.g. UEs in an idle mode, and listening in a PCH or FACH, etc.

The CRNC may not apply counting for a first transmission (on Iu, the Session Start message includes the Information Element (IE) MBMS Session Repetition Number) or when the CRNC estimates that the portion of the connected mode UEs interested to receive this service well exceeds the threshold used for the p-t-m transfer mode.

The CRNC may, depending on the counting responses received, gradually extend the counting scope, e.g., starting from CELL_FACH/PCH, to URA_PCH and idle.

The UE responds by a connection request/call update with when set to MBMS reception. Such a UE response only indicates that the UE has not yet received the MBMS transmission correctly. However, the UE may still decide not to receive the concerned transmission because another service may have priority.

The identity of the MBMS transmission is not included in the counting response message.

For a UE-initiated p-t-p request, when a UE in an idle mode or PCH desires receipt of an MBMS transmission, the UE will initiate a connection request/cell update with cause set to MBMS p-t-p request.

The UE typically triggers this request following a counting procedure in which p-t-p is decided and upon cell reselection.

The identity of the MBMS transmission is not included in the p-t-p request message.

A shortened MBMS transmission identity may not be included in the counting response/p-t-p request because of availability of joining information. A trigger condition (counting, cell reselection with transfer mode change to p-t-p, etc.) for more than one of the services a UE has joined may be small.

The CRNC maintains a context for each MBMS service that includes a list of all connected mode UEs that have joined a particular service and are present in a cell or URA controlled by a particular RNC. Such UEs may include UEs that are under a different SRNC.

To make a fair guess of the service for which a p-t-p request applies, the SRNC needs to know for each of the services the Ues have joined the transfer mode used in the concerned cell. The SRNC also needs to know this information for other purposes. The transfer mode information is indicated to the SRNC within the MBMS channel type IE that may be included in several Iur messages, such as Direct Information Transfer, Uplink Signalling Transfer, Radio Link Setup, Radio Link Addition, Common Transport Channel Resource Initiation, etc.

The above description presumes an introduction of a short transmission identity in the counting response/p-t-p request, such as an index to the service available in the concerned cell. The CRNC translates this short transmission identity into a Temporary Mobile Group Identity (TMGI) before forwarding the translation to the SRNC.

The second RAN is also presumed to consider an SRNC based mechanism where an SRNC stores and informs a CRNC about a UE interested in a particular session, such that procedures on the Iur become a level of a session rather than the level of the service.

For mobile Television (TV), described below, a modification request message is sometimes used. A modification request message is normally used to request release of an MBMS service provided via a p-t-p RB and to request to be moved to a preferred frequency layer. A modification request message does not relate to counting.

Mobile TV (M-TV) provides offerings including one or more M-TV packages, typically between five and ten, each including a number of MBMS services, five or six, for example. M-TV services should be delivered efficiently over the radio, e.g. both p-t-m and p-t-p transfer modes should be available. Due to resource limitations, a UMTS cell can only transmit a limited number of M-TV at a given time. For example, only four channels may be provided via a p-t-m transfer mode at one time. Although a UE may subscribe to one or more M-TV packages, the UE might only be able to receive a single M-TV service at a time. Although M-TV services may always be ongoing as regular TV channels are, session start/stop are used infrequently to handle UEs entering a service area. Session repetition is not used for M-TV services. That is, services are indicated as available only in that part of the service area where UEs are present that are interested. This avoids broadcasting unnecessary information. When a first UE enters an area, the concerned RNC registers interest in a service upon which the SGSN provides a session start.

UEs should normally be joined for all services to which they have subscribed. However, the counting of interested UEs is based on the joining information that the SGSN provides to the RNC. In the M-TV scenario, UEs select a single channel out of a package. Each UE should be counted for a channel/service to which the UE is subscribed. To do this, the UE needs to de-join or de-activate other channels to ensure that the UE is counted only for the selected channel. Such procedures are slow and cumbersome.

Currently, the multicast mode can only provide the first two of the above functions, and the broadcast mode can only provide the last two of the above functions. Current joining procedures create the most significant problems because they are slow and cumbersome, and M-TV operators would like to avoid these slow and cumbersome procedures. Currently, UEs cannot avoid the use of joining and still use both p-t-m and p-t-p transfer modes. Transfer mode switching between p-t-m and p-t-p is currently defined for multicast mode.

Joining also facilitates the filtering of session start distribution, e.g., joining allows the distribution of a session start message only to areas where UEs are present that have joined a service. The session start message is only sent to relevant RNCs so the service is broadcast to UEs that have joined the services.

Reasons to count the number of UEs interested in receiving an M-TV service include the selection of a transfer mode and the selection of which service to transmit. To select a transfer mode, the RNC performs counting to verify when the number of interested UEs is above a threshold where a p-t-m transfer mode is the most radio resource efficient transfer mode. To select which service to transmit, the RNC requests UEs to indicate which service they are interested in to determine which services are most popular. The RNC may need a response from a large number of UEs, such as a hundred, to find out the most popular services, which may be limited to as little as four.

An RNC requesting UEs to indicate which service they are interested in this manner applies when the UTRAN, due to radio resource limitations, is only able to transmit a subset of the services for which p-t-m transfer mode is optimal. The p-t-m mode is more efficient and less costly when there are only a few users, such as three or four. When the UTRAN cannot afford to use the p-t-m mode, the UTRAN may use the p-t-p mode for a UE close to the associated Node B. Operators generally aim to deploy systems in such a manner so congestion scenarios resulting in service rejection are reduced.

Proposals for overcoming the above problems include replacing the current indication in the Session Start message on the Iu interface of the MBMS Bearer Service Type is replaced by two separate indications. One indication includes an MBMS Service Type that indicates 'closed user group' or 'free to all', e.g. indicating whether joining is used. Another indication includes a modified MBMS Bearer Service Type that indicates whether multicast or broadcast delivery mode applies, and whether counting and transfer mode selection applies. These two indications enable the RNC to determine whether any counting procedures should be applied independent of whether joining information is provided.

The current 'network based' joining procedure may also be replaced by a 'UE based' procedure which is a slightly less cumbersome procedure than the network based procedure. In the UE based procedure, a UE indicates interest in an M-TV service by providing linking information using the RRC Connection Setup Complete (UEs in RRC_IDLE), Cell Update (UEs in XXX_PCH), and MBMS Modification Request (UEs in FACH and DCH) messages. The MBMS service the UE is interested in receiving is indicated by a new identifier that is introduced in these messages. When the UE is no longer interested in receiving a service, the UE indicates this by sending a Cell Update (UEs in XXX_PCH) or MBMS Modification (UEs in _FACH and DCH) message not including the newly introduced identifier.

The 'UE based joining' information is added to the SRNS relocation information messaged that the UE passed from source to target RNC upon SRNS relocation. The MBMS services the UE is interested to receive is added to the list. The RNC maintains information about which M-TV service a UE has selected. When the UE moves to another RNC, the information is transferred so the new RNC does not have to obtain the information from the UE.

A method and system for providing broadcast services is disclosed in the International Patent Application, published as WO 2005/045603 A2. There, a terminal controller is configured to use data forming the whole of or part of an electronic service guide, and store information concerning the accessibility of services. That information is then used to generate a list of selectable services available to the user. A user interface presents at least part of the list in a selectable manner. Service accessibility display options are included either as a setting in the terminal or as a user input. Subscribed services are presented to the user differently than non-subscribed services.

An introduction to the Multimedia Broadcast/Multicast Service (MBMS) within the 3GPP UMTS standard is provided by ETSI technical specification ETSI TS 125 346, V7.0.0. Particularly, this specification discloses the use, during a point-to-multipoint MBMS session, of counting and repeated recounting of the number of mobile communication devices in a certain operational state and comparing the (re-)counting result to a threshold to decide, whether to further use the point-to-multipoint transfer mode or to switch to a point-to-point transfer mode instead.

A need exists for improved provisions of service details in M-TV services.

### SUMMARY OF THE INVENTION

M-TV applications are not properly supported by the current MBMS specifications. Desired M-TV application characteristics include restriction availability of a service to a closed group where some services are only available to users who have subscribed to those services. Both p-t-m and p-t-p transfer modes should be available where a selection is made depending on the number of UEs desiring the service so the service is delivered efficiently over the radio. The activation of M-TV services should be quick and should not involve cumbersome joining procedures or switching procedures from one M-TV service to another.

Accordingly, an aspect of the present invention is to provide a method and apparatus for providing information associated with available M-TV services.

Another aspect of the present disclosure is to provide an efficient retransmission apparatus and method for processing high-speed data in a mobile communication system.

The invention is carried out according to independent claim 1.

### BRIEF DESCRIPTION OF THE DRAWINGS

The above and other aspects, features and advantages of the present invention will become more apparent from the following detailed description when taken in conjunction with the accompanying drawings in which:
FIG. 1 is a block diagram of a conventional mobile communications system;
FIG. 2 is a block diagram of a conventional UMTS network;
FIG. 3 is a block diagram of a UMTS network according to the present invention.

### DETAILED DESCRIPTION OF THE PREFERRED EMBODIMENTS

Preferred embodiments of the present invention will now be described in detail with reference to the drawings. In the following description, descriptions of known functions and configurations incorporated herein have been omitted for clarity and conciseness.

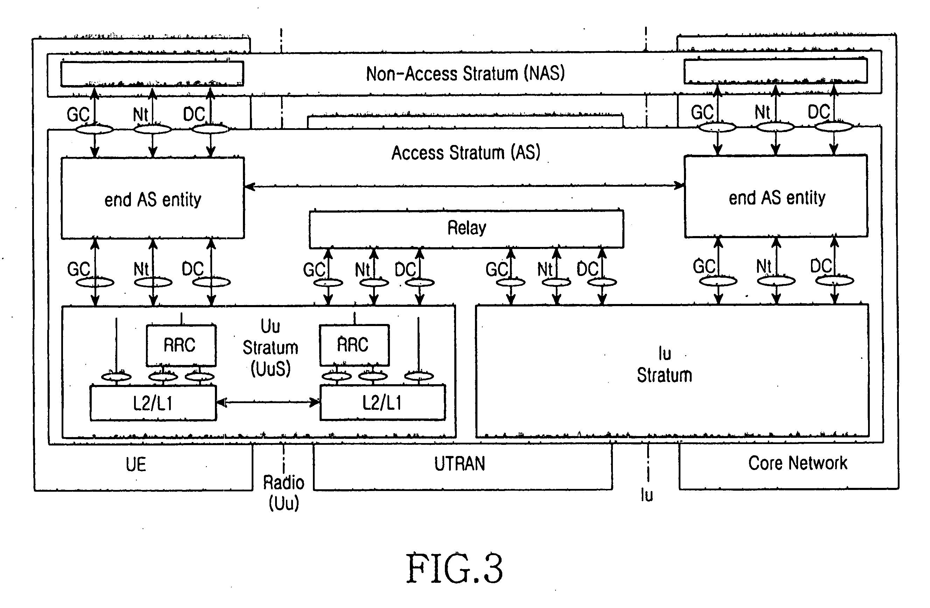

FIG. 3 shows Universal Mobile Telecommunications Network (UMTS) according to the present invention. The UMTS includes a UE, a Core Network (CN), a UMTS Terrestrial Radio Access Network (UTRAN), and one or more UEs. The UMTS also includes a Non-Access Stratum (NAS), an Access Stratum (AS), end AS entities, a relay, a Uu stratum, and an Iu stratum. In order to connect the UTRAN with a packet data network, such as the Internet, the CN includes a Serving GPRS Support Node (SGSN) and a Gateway GPRS Support Node (GGSN).

The Uu Stratum includes a plurality of Radio Resource Controllers (RRC) and a plurality of L1/L2s. The Access Stratum includes lower radio specific layers of protocols in the UMTS network, such as the Radio Resource Control, the Radio Link Control, the Medium Access Control, etc., as well as the Physical layer functionality. The Access Stratum offers services through Service Access Points (SAP), indicated by circles in FIG. 3, to the Non-Access Stratum. The Non-Access Stratum includes the upper radio specific layers of the protocols. For example, the NAS can include the Call Control (CC), the Mobility Management (MM) and the Session Management (SM) protocols.

The present invention provides a Selective Reception Service Group (SRSG). In the SRSG of the present invention, a UE has only one SRSG which concerns a group of related services, such as an M-TV package, to which the UE is subscribed. The UE may also have other SRSGs associated with different service areas. The group of services contained in the SRSGs associated with the UE is herein referred to as the SRSG set of the UE. The UE receives, at most, one service out of the SRSG set and that service is selected by the UE and is referred to herein as the selected SRSG set service. The UE may receive other MBMS services that are not part of the SRSG. A service that belongs to an SRSG for one UE cannot be a regular service. In other words, a service for another UE not included in the SRSG is a non-UE specific characteristic of the service. All UEs have this characteristic. When a service belongs to a package, this characteristic applies for all UEs that have joined the package.

This selection only applies to the services in the SRSG while there are still other regular services operating in the normal fashion. A number of specific services that are available to be transmitted over a cell are grouped together in an SRSG. In this manner a UE only needs to determine which group is available in order to determine which of the services are available, as the service groups are known.

Various methods and operations are associated with the SRSG of the present invention. Upper layers make the UE aware that the service is part of the SRSG, e.g. as part of the joining procedure or when activating a broadcast service. This is initially done once to avoid further signalling at later stages upon counting.

The subset of SRSG set services that the UE is able to receive simultaneously may be more than one, e.g. a number n. The value of n may depend on UE capabilities. For example, the UE may be able to receive two channels at the same time.

The network may employ more than one SRSG set. For each SRSG set the network may specify independent restrictions regarding the number of services that the UE can receive. For example, there could be two sets and the UE could receive one channel from each set.

Rather than maintaining up to date information about the selected SRSG set service, the UTRAN performs periodic recounting, e.g. over certain intervals. This information is used to determine how many UEs in the cell need the available M-TV service and enables the network to determine whether the transmission is to be p-t-m or p-t-p. With this approach, whenever the UE changes the selected SRSG set service the need for the UE to inform the UTRAN is avoided.

A procedure to introduce UE-initiated p-t-p RB establishment for UEs on a _FACH and _DCH is used when the UTRAN indicates that an SRSG set service is provided via p-t-p. Currently, UE-initiated p-t-p RB establishment is not defined for UEs on the _FACH and _DCH. However, the present invention uses this procedure when the UTRAN decides to use p-t-p transfer mode and the UTRAN does not know which UEs are interested to receive the service. It is undesirable for UTRAN to check the interest of each UE in _FACH and _DCH.

In the present invention, the code point 'request PTP RB' for the IE 'MBMS required UE action' within the MBMS modified services information is allowed when the message is sent on (DCCH) to introduce the option to notify UEs in _DCH that a service is available via p-t-p transfer mode.

In the present invention, the UTRAN does not need to include the identity of each SRSG service available in the p-t-p mode. When a UE is informed about the availability of one or more service of an associated SRSG, the UE assumes that all services of which the UE is not explicitly informed are available via a p-t-p radio bearer. The UE uses this process for service information received on the MCCH, as well as for information received on the DCCH.

The counting procedure can also cover UEs in _DCH, as well as high capable _DCH UEs, e.g. UEs that are able to receive MBMS in parallel to non-MBMS activity. For such UEs, the 'counting request' can be provided via the MCCH, e.g. a dedicated notification on DCCH is not needed. When the UTRAN does not maintain up to date information about the selected SRSG set service, the UTRAN sends a dedicated notification to each UE on the _DCH to trigger counting.

The present invention enables the UTRAN to request whether the UE, upon entering _DCH, has subscribed to an SRSG. The UTRAN applies this information to avoid sending a dedicated notification to UEs that have not subscribed to an SRSG, when not receiving joining information from the CN.

A single bit is introduced within the "MBMS Access Information" message to indicate 'SRSG counting'. This is an improvement on current processes where it would be necessary to indicate the identity of each service, which requires a large signalling overhead of 4 bytes for each service.

A single bit is introduced within the "MBMS Modified Services Information" message to indicate 'SRSG counting'.

Further, a variant of the re-counting procedure is added in which only UEs respond for which there was a change since the previous count (e.g. a change of selected SRSG service, a cell re-selection). The UTRAN can apply this variant a number of times after which a regular re-count is done e.g. to overcome UEs moving out of service area.

The present disclosure improves over current schemes for at least the following reasons.

The present disclosure overcomes problems associated with current schemes.

When the SRSG does not change, the UE is initially informed at once and avoids the transfer of this information at later times, e.g., when the UE has to indicate the selected SRSG service.

The present disclosure provides for further unforeseen case/network scenarios. The UTRAN does not need to maintain 100% of up to date information about the selected SRSG services, e.g. the only cost of being not entirely up to date is that the p-t-m transfer mode is used a little longer than needed. The p-t-p transfer mode would be more optimal when no transmission is needed. The cost depends on the network configuration, e.g. how the network applies re-counting.

The periodic recounting approach has advantages including the network is able to influence/ control the signalling load, the recounting provides more robust operation, e.g., the periodic recounting can accommodate high UE penetrations, and the periodic recounting involves minimal changes to current standards. Changes to current standards depend on a solution that is agreed for UEs in _FACH and _DCH. The UTRAN may maintain up to date information about the selected SRSG service for UEs in those states, resulting in associated changes to the standards that can be reused for UEs in idle and _PCH.

The present invention avoids the need for the UTRAN to indicate more than one service of an SRSG package that is provided in the p-t-p mode, saving over 4 bytes on the MCCH for each service. Currently all available services are indicated either in the MBMS modified services information or the MBMS unmodified services information messages.

The present disclosure may be used to limit changes to standards and to align the counting procedure with other approaches suggested for the other UE states.

The present disclosure improves the counting of UEs on the _DCH when joining is not used. In other words, the present disclosure enables the UTRAN to send a dedicated notification only to relevant_DCH UEs rather than all UEs in this state.

The present disclosure removes a limitation in the current specification that becomes important when recounting is regularly used for groups of services. For example, the current approach specifies each individual service for which recounting is performed. The MBMS Access Information message can only include up to 8 services. The MBMS Modified Services Information message can only include up to 32 services.

Other modifications can be performed in parallel when recounting for SRSG services.

The 'delta' variant helps to identify changes regarding UEs in CELL_PCH involving limited signalling overhead.

Several 3GPP technical specifications are available for providing information regarding UMTS networks and MBMS. Such technical specifications can be found at http://wNvw.3cpp.org/specs.htm. Some examples include 3GPP TS 21.905, 3GPP TS 22.146, 3GPP TS 25.301, 3GPP TS 25.331, 3GPP TS 25.346, 3GPP TS 25.401 and 3GPP TS 25.246. Additional information can be found in the REL-6 MBMS specifications, the R2-061487 MBMS, and the version 6.9.0 Radio Resource Control (RRC) Protocol Specification Release 6.

While the invention has been shown and described with reference to certain preferred embodiments thereof, it will be understood by those skilled in the art that various changes in form and details may be made therein without departing from the scope of the invention as defined by the appended claims.

## Claims

1. A method for counting a number of mobile communication devices that are enabled to receive a specific mobile television service in a specific transmission area of a telecommunications network controlled by a network controller, the method comprising:
arranging a plurality of mobile television services into a specified group;
transmitting information identifying the specified group in a single message to one of the mobile communication devices
from the network controller; and
counting at a regular interval, by the network controller, of the number of mobile communication devices which are enabled to receive the specific mobile television service included in the specified group;
wherein a single bit is used within the MBMS Access Information message or the MBMS Modified Service Information message
sent by the network controller to the mobile communication device to indicate counting,
**characterised in that**
the mobile communication device is informed about the availability of one or more services associated with the specified group in the point-to-point mode;
the information does not include the identity of each service within the specified group which is available in the point-to-point mode; and
when the mobile communication device is informed about the availability of one or more services associated with the specified group in the point-to-point mode, the mobile communication device assumes that all services within the specified group of which the mobile communication device is not explicitly informed are also available via a point-to-point radio bearer.

## Patentansprüche

1. Verfahren zum Zählen einer Anzahl von Mobilkommunikationsgeräten, die befähigt sind, einen bestimmten Mobilfernsehdienst in einem bestimmten Sendegebiet eines durch eine Netzwerksteuereinheit gesteuerten Telekommunikationsnetzes zu empfangen, wobei das Verfahren Folgendes umfasst:
Anordnen mehrerer Mobilfernsehdienste zu einer spezifizierten Gruppe;
Senden von Informationen, die die spezifizierte Gruppe identifizieren, in einer einzelnen Nachricht von der Netzwerksteuereinheit an eines der Mobilkommunikationsgeräte; und
Zählen, durch die Netzwerksteuereinheit in einem regelmäßigen Intervall, der Anzahl von Mobilkommunikationsgeräten, die befähigt sind, den in der spezifizierten Gruppe enthaltenen bestimmten Mobilfernsehdienst zu empfangen;
wobei innerhalb der MBMS Access Information-Nachricht oder der MBMS Modified Service Information-Nachricht, die durch die Netzwerksteuereinheit an das Mobilkommunikationsgerät gesendet wird, ein einzelnes Bit verwendet wird, um das Zählen anzuzeigen,
**dadurch gekennzeichnet, dass**
das Mobilkommunikationsgerät über die Verfügbarkeit eines oder mehrerer Dienste, die mit der spezifizierten Gruppe im Punkt-zu-Punkt-Modus verknüpft sind, informiert wird;
die Informationen nicht die Identität eines jeden Dienstes innerhalb der spezifizierten Gruppe, der im Punkt-zu-Punkt-Modus verfügbar ist, enthalten; und
wenn das Mobilkommunikationsgerät über die Verfügbarkeit eines oder mehrerer Dienste, die mit der spezifizierten Gruppe im Punkt-zu-Punkt-Modus verknüpft sind, informiert wird, das Mobilkommunikationsgerät annimmt, dass alle Dienstleistungen innerhalb der spezifizierten Gruppe, über die das Mobilkommunikationsgerät nicht explizit informiert wird, ebenfalls über einen Punkt-zu-Punkt-Funkträger verfügbar sind.

## Revendications

1. Procédé pour compter un nombre de dispositifs de communications mobiles qui sont activés pour recevoir un service de télévision mobile spécifique dans une zone de transmission spécifique d'un réseau de télécommunications commandé par un contrôleur de réseau, le procédé comprenant :
l'agencement d'une pluralité de services de télévision mobile dans un groupe spécifié ;
la transmission d'informations identifiant le groupe spécifié dans un message unique à l'un des dispositifs de communications mobiles à partir du contrôleur de réseau ; et
le comptage, à un intervalle régulier, par le contrôleur de réseau, du nombre de dispositifs de communications mobiles qui sont activés pour recevoir le service de télévision mobile spécifique inclus dans le groupe spécifié ;
dans lequel un bit unique est utilisé à l'intérieur du message d'informations d'accès MBMS ou du message d'informations de service modifié MBMS envoyé par le contrôleur de réseau au dispositif de communications mobiles pour indiquer le comptage,
**caractérisé en ce que**
le dispositif de communications mobiles est informé de la disponibilité d'un ou plusieurs services associés au groupe spécifié dans le mode de point à point ;
les informations n'incluent pas l'identité de chaque service à l'intérieur du groupe spécifié qui est disponible dans le mode de point à point ; et
lorsque le dispositif de communication mobile est informé de la disponibilité d'un ou plusieurs services associés au groupe spécifié dans le mode de point à point, le dispositif de communications mobiles suppose que tous les services à l'intérieur du groupe spécifié desquels le dispositif de communication mobile n'est pas explicitement informé sont également disponibles par l'intermédiaire d'une porteuse radio de point à point.
